(19) **Europäisches Patentamt**
**European Patent Office**
**Office européen des brevets**

(11) Veröffentlichungsnummer: **0 442 080 A1**

(12) ## EUROPÄISCHE PATENTANMELDUNG

(21) Anmeldenummer: 90123953.3

(51) Int. Cl.5: **B01D 53/00**, B01D 53/34

(22) Anmeldetag: **12.12.90**

(30) Priorität: **15.02.90 DE 4004647**

(43) Veröffentlichungstag der Anmeldung:
**21.08.91 Patentblatt 91/34**

(84) Benannte Vertragsstaaten:
**AT BE CH DE DK ES FR GB GR IT LI LU NL SE**

(71) Anmelder: **ARASIN GMBH**
**Weseler Strasse 100**
**W-4223 Voerde/Niederrhein(DE)**

(72) Erfinder: **Körner, Bernhard, Dipl.-Chem.**
**Boystrasse 70**
**W-4390 Gladbeck(DE)**

(74) Vertreter: **Seiler, Siegfried**
**c/o DEUTSCHE SOLVAY-WERKE GmbH**
**Langhansstrasse 6 Postfach 11 02 70**
**W-5650 Solingen 11(DE)**

(54) **Nichtschäumendes oder schwachschäumendes Mittel zum Reinigen von Gasen oder Abgasen sowie Verfahren zur Reinigung von Gasen oder Abgasen.**

(57) Die vorliegende Erfindung betrifft ein nichtschäumendes oder schwachschäumendes Mittel zum Reinigen von Gasen oder Abgasen unter Abtrennung von unerwünschten, chemischen Bestandteilen, wobei das mindestens zweiphasige Mittel 0,1 bis 10 Gew.-% mindestens eines fettsäurefreien Tensides, 1 bis 25 Gew.-% mindestens einer ölartigen physikalisch wasserunlöslichen oder wasserschwerlöslichen Flüssigkeit (gemessen bei Wassertemperatur), mehr als 40 Gew.-% Wasser 0,05 bis 8 Gew.% mindestens eines inerten feinteiligen Feststoffes mit einer Teilchengröße unter 1 $\mu$m und/oder 0,01 bis 10 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert und/oder die Polymerisation, Polykondensation oder Polyaddition initiert oder beschleunigt und/oder daß das Tensid aus einem Gemisch von mindestens 2 Tensiden mit unterschiedlichen HLB-Werten, die sich um mehr als 3 (HLB-Werte) unterscheiden, besteht und/oder 0 bis 13 Gew.-% mindestens eines Entschäumungsmittels, Verarbeitungshilfs- und/oder Zusatzmittels enthält. Die Erfindung betrifft weiterhin ein Verfahren unter Verwendung des Mittels.

EP 0 442 080 A1

Rank Xerox (UK) Business Services

## NICHTSCHÄUMENDES ODER SCHWACHSCHÄUMENDES MITTEL ZUM REINIGEN VON GASEN ODER ABGASEN SOWIE VERFAHREN ZUR REINIGUNG VON GASEN ODER ABGASEN

Die vorliegende Erfindung betrifft ein nichtschäumendes oder schwachsäumendes Mittel zum Reinigen von Gasen oder Abgasen unter Abtrennung von unerwünschten chemischen Bestandteilen, vorzugsweise von organischchemischen Bestandteilen (ausgenommen Abluft aus Lackspritzkabinen), wobei das Mitttel mindestens zweiphasig ist, und das Mittel bestimmte Gewichtsmengen mindestens eines fettsäurefreien Tensides, mindestens einer ölartigen physikalisch wasserunlöslichen oder wasserschwerlöslichen Flüssigkeit (gemessen bei Wassertemperatur), mindestens eines inerten feinteiligen Feststoffes mit einer Teilchengröße unter 1 $\mu$m, und/oder mindestens eines Tensidgemisches und mehr als 40 Gew.-% Wasser sowie gegebenenfalls mindestens eine Entschäumungsmittels, Verarbeitungshilfs- und/oder Zusatzmittels enthält.

Die Aufnahme von unerwünschten Verunreinigungen mittels Wasser, beispielsweise in Waschtürmen, ist in der Praxis besonders bei wasserschwerlöslichen Verunreinigungen häufig unzureichend.

Es wird daher u. a. ein Verfahren in der Praxis verwendet, bei dem unter Benutzung eines Tensides ein Schaum gebildet wird und das zu reinigende Gas durch den querschnittsabdeckenden Schaum geleitet wird. Die Abtrennung der gewunschten Bestandteile erfolgt dann auf physikalischem Wege, z. B. mittels Adsorptionsmitteln, durch Erhitzen der Schaumflüssigkeit und dgl. in einem getrennten Behälter (vgl. DE-PS 18 07 327). Eine Kombination des Schaumverfahrens mit Feststoffteilchen oder Bakterien stößt insofern auf Schwierigkeiten, als die auftretenden Scherkräfte die Biomasse beeinträchtigen oder schädigen und/oder eine Austragung bzw. Trennung der Feststoffteilchen und/oder Biomasse aus den Adsorptionsmedium im Wäscher und/oder nachfolgenden aeroben Reaktor erfolgt.

Ziel und Aufgabe der vorliegenden Erfindung war es, ein Mittel und ein Verfahren zu finden, bei dem mit einem hohen Wirkungsgrad die Verunreinigungen aus dem Gas entfernt und möglichst unschädlich für die Umwelt gemacht werden können. Das Mittel und das Verfahren sollten sowohl für größere als auch für kleinere Anlagen geeignet sein und auch unterschiedliche Verunreinigungen des Gases (ausgenommen Abluft aus Lackspritzkabinen) aufnehmen können. Die Verunreinigungen, besonders die schwer wasserlöslichen Verunreinigungen, sollten aus dem Gas entfernt und durch chemische und/oder biologische Umsetzung oder durch Abbau umgewandelt werden.

Erfindungsgemäß wurde festgestellt, daß diesen Zielen und Aufgaben ein nichtschäumendes oder schwachschäumendes Mittel zum Reinigen Gasen oder Abgasen unter Abtrennung von unterwünschten chemischen Bestandteilen, vorzugsweise von organisch-chemischen Bestandteilen (ausgenommen Abluft aus Lackspritzkabinen) gerecht wird. Das erfindungsgemäße Mittel ist mindestens zweiphasig und enthält oder besteht aus 0,1 bis 10 Gew.-% mindestens eines fettsäurefreien Tensides, 1 bis 25 Gew.-% mindestens einer ölartigen physikalisch wasserunlöslichen oder wasserschwerlöslichen Flüssigkeit (gemessen bei Wassertemperatur), mehr als 40 Gew.-% Wasser, 0,05 bis 8 Gew.-% mindestens eines inerten feinteiligen Feststoffes mit einer Teilchengröße unter 1 $\mu$m und/oder 0,01 bis 10 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert und/oder die Polymerisation, Polykondensation oder Polyaddition initiert oder beschleunigt und/oder daß das Tensid aus einem Gemisch mindestens 2 Tensiden mit unterschiedlichen HIB-Werten, die sich um mehr als 3 (HLB-Werte) unterscheiden, besteht und/oder 0 bis 13 Gew.-% mindestens eines Entschäumungsmittels, Verarbeitungshilfs- und/oder Zusatzmittels oder besteht daraus. Durch die Mitverwendung des Hilfsmittels und/oder des Tensidgemisches mit unterschiedlichen HIB-Werten wird der Wirkungsgrad des Mittels erheblich verbessert.

Nach einer bevorzugten Ausführungsform enthält das Mittel 0,5 bis 2,5 Gew.-% mindestens eine fettsäurefreien Tensides, 1,5 bis 20 Gew.-% mindestens einer ölartigen physikalisch wasserunlöslichen oder wasserschwerlöslichen Flüssigkeit (gemessen bei Wassertemperatur), mehr als 55 Gew.-% Wasser, 0,5 bis 5 Gew.-% mindestens eines inerten feinteiligen Feststoffes mit einer Teilchengröße unter 0,1 $\mu$m und/oder 0,05 bis 8,5 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert oder die Polymerisation, Polykondensation oder Polyaddition initiert oder beschleunigt und/oder daß das Tensid aus einem Gemisch mindestens 2 Tensiden mit unterschiedlichen HLB-Werten, die sich um mehr als 5 (HLB-Werte) unterscheiden, besteht und/oder 0,01 bis 9 Gew.-% mindestens eines Entschäumungsmittels, Verarbeitungshilfs-und/oder Zusatzmittels oder besteht daraus.

Die Art und die eingesetzte Konzentration (innerhalb des angegebenen prozentualen Gewichtsbereiches) richtet sich nach der Art und chemischen Zusammensetzung der zu entfernenden Verunreinigungen. Nach einer bevorzugten Ausführungsform werden ionische oder organische Kettenstarter, Katalysatoren

EP 0 442 080 A1

und/oder Mittel zur Reaktionsbeschleunigung eingesetzt, chemische Mittel oder Komponenten zugefügt, die mit dem abzuscheidenden Schadstoff unter Polymerisation, Kondensation oder Polykondensation und/oder Addition oder Polyaddition reagieren, wobei bevorzugt solche eingesetzt werden, die zu leicht mechanisch abtrennbaren oder schwerlöslichen Verbindungen im Medium führen. Die Abtrennung auf physikalischem Wege kann in an sich bekannten mechanischen Verfahren, vorzugsweise durch Filtration und/oder Sedimentation erfolgen.

Als Katalysatoren oder Beschleuniger werden u. a. organische oder anorganische Peroxide, vorzugsweise Alkaliperoxide, Peroxo- und Peroxyverbindungen, Ammoniumperoxodisulfate, peroxidische Borverbindungen, Alkylperoxide, insbesondere Butylperoxid, Azo- und/oder Nitrilverbindungen, z. B. Azoisobutylnitril, saure oder basische katalytisch wirkende Verbindungen und dgl. eingesetzt.

Das Tensid ist dabei ein nichtschäumendes oder schwachschäumendes Tensid, oder das Tensid oder Tensidgemisch enthält zusätzlich ein Entschäumungsmittel.

Nach einer bevorzugten Ausführungsform besteht das Tensid oder Tensidgemisch aus mindestens einem fettsäurefreien, nichtionogenen, nichtschäumenden oder schwachschäumenden Tensid und/oder mindestens einem nichtionogenen schäumenden und fettsäurefreien Tensid, das zusätzlich mindestens ein Entschäumungsmittel enthält und/oder aus einem Gemisch von mindestens einem nichtionogenen Tensid mit mindestens einem ionogenen Tensid, die nichtschäumend oder schwachschäumend sind oder ein Entschäumungsmittel enthalten. Bevorzugt werden nach einer Ausführungsform nichtbakterizide Tenside und/oder nichtbakterizide Entschäumungsmittel im Mittel verwendet.

Nach einer weiteren bevorzugten Ausführungsform ist im Mittel das Tensid oder Tensidgemisch in der angegebenen Matrix (Mittel und absorbierte oder absorbierte und gegebenenfalls absorbierte Bestandteile) biologisch schwer abbaubar ((innerhalb von 24 Std. nur maximal bis zu 20 Gew.-%, vorzugsweise bis zu 10 Gew.-%, bezogen auf den Gesamttensidgehalt im Mittel (100 Gew.-Teile)).

Das mindestens zweiphasige Mittel besteht aus mindestens einer äußeren Wasserphase und einer inneren Ölphase.

Nach einer anderen bevorzugten Ausführungsform enthält der inerte feinteilige Festtoff ein Oberflächenbehandlungsmittel oder modifizierungsmittel, vorzugsweise ein Hydrophobierungsmittel oder Coatingmittel oder ist ganz oder teilweise auf der Oberfläche damit bedeckt oder überzogen.

Nach einer weiteren bevorzugten Ausführungsform sind 0,001 bis 5 Gew.- aerobe und/oder anaerobe Bakterien oder eines aeroben und/oder anaeroben Bakterienstammes (berechnet als Trockenmasse an Bakterien), vorzugsweise 0,05 bis 1,5 Gew.-% im Mittel enthalten.

Die im Mittel enthaltenden Bakterien bestehen nach einer Ausführungsform zu mehr als 80 Gew.-%, vorzugsweise zu mehr als 95 Gew.-% (bezogen auf 100 Gew.-% eingesetzte Bakterien), aus aeroben Bakterien.

Die ölartige physikalisch wasserunlösliche oder wasserschwerlösliche organisch-chemische Flüssigkeit oder das Flüssigkeitsgemisch weist einen Siedepunkt von mehr als 450 K, vorzugsweise mehr als 520 K, (gemessen bei 1 bar) und/oder einen Dampfdruck unter 1 hPa, vorzugsweise unter 0,1 hPa, (gemessen bei 293,15 K) auf.

Die ölartige wasserunlösliche oder wasserschwerlösliohe organisch-chemische Flüssigkeit oder das ölartige Flüssigkeitsgemisch enthält mindestens eine flüssige organisch-chemische Verbindung oder ein Verbindungsgemisch, die Ester-, Äther-, Hydroxy-, Oxyäther- oder Hydroxyäther-, Keto-, und/oder organische Phosphatgruppen und/oder einen Weichmacher für Kunststoffe und/oder ein Silikonöl enthält und vorzugsweise nicht bakterizid ist oder besteht daraus.

Die organisch-chemische, ölartige, wasserunlösliche oder wasserschwerlösliche Flüssigkeit oder das ölartige Flüssigkeitsgemisch in der angegebenen Matrix (Mittel und absorbierte oder absorbierte und gegebenenfalls absorbierte Bestandteile) ist bevorzugt biologisch schwer abbaubar (innerhalb von 24 Std. nur maximal bis zu 2 Gew.-%, vorzugsweise kleiner als 1 Gew.-%, bezogen auf 100 Gew.-Teile der im Mittel enthaltenden ölartigen, organisch-chemischen, wasserunlöslichen oder wasserschwerlöslichen Flüssigkeit oder der Mischung der ölartigen, organisch-chemischen wasserunlöslichen oder wasserschwerlöslichen Flüssigkeiten.)

Nach einer weiteren Ausführungsform enthält das Mittel 0,001 bis 3 Gew.-%, vorzugsweise 0,1 bis 1 Gew.-%, mindestens eines Co-Surfactant, Co-Tensides oder eines Hilfstensides, das die Wirkung des Tensides verstärkt, vorzugsweise ausgewählt aus der Gruppe der ein- oder mehrvertigen Alkohole oder Polyalkohole, Hydroxylalkohole, Äther oder Polyäther, Ester und/oder Hydroxyäther oder Polyhydroxyäther.

Die Bestandteile des Mittels werden als in Wasser nichtschäumende oder in Wasser schwach schäumende Verbindungen ausgewählt und/oder mit einem entsprechenden Gewichtsanteil eines Entschäumungsmittels in einer derartigen Gewichtskonzentration versehen und/oder in einer derartigen Auswahl eingesetzt, daß ein nichtschäumendes oder sehr schwach schäumendes Mittel zur Reinigung von Gasen

3

oder Abgasen vorliegt.

Nach einer bevorzugten Ausführungsform beträgt das Verhältnis der nichtbakteriziden ölartigen Flüssigkeit zu Wasser 1 : 2 bis 1 : 100, vorzugsweise 1 : 4 bis 1 : 60.

Nach einer weiteren bevorzugten Ausführungsform beträgt das Gewichtsverhältnis von Tensid und/oder feinteiligem inerten Feststoff zu der nichtbakteriziden, ölartigen Flüssigkeit 1 : 0,8 bis 1 : 45, vorzugsweise 1 : 1,2 bis 1 : 25.

Nach einer anderen bevorzugten Ausführungsform enthält das Mittel als Zusatzmittel 0 oder 0,1 Gew.-% bis 10 Gew.-%, vorzugsweise 0,5 Gew.-% bis 9,8 Gew.-% eines feinteiligen Trägerstoffes mit einem mittleren Körnungsdurchmesser von unter 4 mm, vorzugsweise unter 3 mm.

Das erfindungsgemäße Mittel zum Reinigen von Gasen oder Abgasen bricht nur sehr schwer. Auch bei einer Änderung des pH-Wertes bzw. pH-Wertänderungen in gewissen Bereiche tritt ein Brechen der Flüssigkeit nicht auf.

Als ölartige, physikalisch, wasserunlösliche oder wasserschwerlösliche Flüssigkeit werden nach einer Ausführungsform entsprechende Aliphate, Aromate, Paraffinkohlenwasserstoffe, Mineralöle oder deren Gemische und dgl. eingesetzt mit entsprechenden Siedepunkten. Diese Ausführungsform ist lediglich bei Vorhandensein ganz bestimmter Abgase, z. B. kunstharzhaltigen Abgasen zweckmäßig.

Bevorzugt wird jedoch eine ölartige, wasserunlösliche oder wasserschwerlösliche organische Flüssigkeit oder ein organisches Flüssigkeitsgemisch eingesetzt, die bzw. das Ester-, Ether-, Hydroxy-, Oxyether- oder Hydroxyether-, und/oder halogenierte organische Verbindungen mit mehr als 5 C-Atomen, Keto- und/oder organische Phosphatgruppen und/oder einen Weichmacher für Kunststoffe und/oder ein Silikonöl enthält und nicht bakterizid ist.

Als Weichmacher werden vor allem solche Verbindungen eingesetzt, die in dem Tensid oder Tensidgemisch und/oder in dem im Gas enthaltenen flüssigen oder gasför migen organisch-chemischen Bestandteile, vorzugsweise organisch-chemischen Lösungsmittel, löslich sind. Weiterhin werden vorzugsweise bei Raumtemperatur und/oder der Verfahrenstemperatur flüssige Weichmacher eingesetzt. Vorzugsweise werden als Weichmacher z. B. Alkyl-, Aryl- oder Alkyl-Arylphthalate, vorzugsweise Diisononylphthalat und/oder Benzylbutylphthalate, Alkylphosphate bzw. Phosphorsäureester, vorzugsweise Tributylphosphat, Adipate, vorzugsweise Benzyloctyladipat und/oder Diisononyladpat, Di-(2-äthylhexyl)adipat, Stearate und Oleate, z. B. Alkylstearate oder Alkyloleate, vorzugsweise Butyloleat, Butylstearat oder Amylstarat, Bis-(dimethylbenzyl)ether, p-Toloulsulfonsäureäthylester, Glycerinester, Glycerinether oder höhermolekulare Glykolether eingsetzt. Als Ersatz der Teilersatz für Weichmacher können vorteilhaft gleiche Gewichtsmengen flüssiger organisch-chemischer Verbindungen mit mehr als 5 C-Atomen auf der Basis von Ketonen, z.B. Ketone mit Alkyl-, Aryl- der Arylalkylgruppen, vorzugsweise Benzophenon, Äthylbenzophenon und/oder halogenierte, vorzugsweise fluorierte organisch-chemische Verbindungen mit mehr als 5 C-Atomen und/oder Polyvinylalkylether, vorzugsweise Polyvinylmethylether, vewendet werden. Nach einer Ausführungsform werden bevorzugt Gemische eingesetzt.

Nach einer bevorzugten Ausführungsform wird der Weichmacher oder ein anderer Ester, der Ether, das Etherderivat, der Polyether oder der Hydroxygruppen enthaltende Polyether durch mindestens einen Stabilisator stabilisiert.

Nach einer anderen bevorzugten Ausführungsform ist der flüssige Weichmacher oder andere flüssige Ester ganz oder teilweise durch mindestens einen flüssigen Ether mit mehr als 5 C-Atomen, vorzugsweise mehr als 8 C-Atomen, und/oder ein mehr als 5 C-Atome, vorzugsweise mehr als 8 C-Atome, enthaltendes Etherderivat, einen Polyether und/oder einen Hydroxygruppen enthaltenden Ether oder Polyether ersetzt.

Als Tenside werden bevorzugt nichtionogene Tenside eingesetzt, vorzugsweise Alkyl- und Alkylphenylpolyethylenglykolether, Alkylolamide oder Trialkylaminoxide und/oder fluorhaltige Tenside.

Nach einer anderen bevorzugten Ausführungsform werden die nichtionischen Tenside im Gemisch mit ionischen Tensiden, vorzugsweise kationischen und/oder anionischen und/oder amphoteren Tensiden eingesetzt.

Nach einer bevorzugten Ausführungsform beträgt das Gewichtsverhältnis von nichtionischem Tensid zu ionischem Tensid 50 : 1 bis 1 : 1, vorzugweise 25 : 1 bis 5 : 1.

Als Tenside oder Tensidgemische werden vorzugsweise Fluortenside, Polyoxyethylen-Verbindungen und/oder Polyalkylenglykolether und/oder Polyoxyethylen-Nonylphenol für sich allein oder in Kombination mit Isopropylamin-Doecylbenzolsulfat und/oder Alkylarylsulfonat und/oder fluorhaltige Tenside verwendet.

Die Erfindung betrifft weiterhin ein Verfahren zur Reinigung von Abgasen, wobei die Abgase einer Gaswaschvorrichtung kontinuierlich oder diskontinuierlich zugeführt, dort verteilt und mit dem Abgas in Kontakt gebracht, die Schadstoffe, Verunreinigungen oder abzutrennenden Stoffe mit der Waschflüssigkeit zumindestens in einen Reaktor oder eine ähnliche Vorrichtung überführt, wo die Schadstoffe oder ein Teil derselben auf biologischem Wege umgesetzt abgebaut und/oder chemisch oder physikalisch verändert und/oder ganz oder teilweise nachfolgend abgetrennt werden. Die innerhalb des Verfahrens verwendete Waschflüssigkeit ist mindestens zweiphasig und enthält oder besteht aus mindestens einer äußeren Wasserphase und einer inneren Ölphase und 0,1 bis 10 Gew.-% mindestens eines fettsäurefreien Tensides, mehr als 40 Gew.-% Wasser 0,05 bis 8 Gew.-% mindestens eines inerten feinteiligen Feststoffes mit einer Teilchengröße unter 1 $\mu$m und/oder 0,01 bis 10 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert und/oder die Polymerisation, Polykondensation oder Polyaddition initiert oder beschleunigt und/oder daß das Tensid aus einem Gemisch mindestens 2 Tensiden mit unterschiedlichen HLB-Werten, die sich um mehr als 3 (HLB-Werte) unterscheiden, besteht und/oder 0 bis 13 Gew.-% mindestens eines Entschäumungsmittels, Verarbeitungshilfs- und/oder Zusatzmittels (HLB-Werte) unterscheiden, besteht und/oder 0,01 bis 9 Gew.-% mindestens eines Entschäumungsmittels, Verarbeitungshilfs-und/oder Zusatzmittels.

Die Waschflüssigkeit wird im fein oder feinstverteilten Zustand mit dem in Gegenrichtung geleiteten Abgas in Kontakt gebracht oder in Gegenwart des Abgases vernebelt, verdüst oder verwirbelt. Die die organischchemischen Bestandteile des Gases oder die Verunreinigungen enthaltende Waschflüssigkeit wird an oder in der Nähe des Bodens der Gaswaschvorrichtung abgeleitet oder abgezogen oder abgepumpt und unmittelbar oder unter Zwischenschaltung weiterer Verfahrensschritte zu einem oder mehreren Reaktions-, Umsetzungs- und/oder Absetz-, Abtrennungsbehältern geführt. Die von den organisch-chemischen Stoffen, Lösemitteln oder Schadstoffen gereinigte Waschflüssigkeit wird nachfolgend ganz oder teilweise in die Gaswaschvorrichtung zurückgeleitet und erneut zur Abgasreinigung verwendet.

Nach einer bevorzugten Ausführungsform des erfindungsgemäßen Verfahrens wird für das Verfahren eine Waschflüssigkeit verwendet, die 0,6 bis 1,5 Gew.-%, mindestens eines fettsäurefreien Tensides, wobei das Tensid aus einem Gemisch von mindestens 2 Tensiden mit unterschiedlichen HLB-Werten, die sich um mehr als 4 (HLB-Werte) unterscheiden, besteht, 1,5 bis 20 Gew.-% mindestens einer nichtbakteriziden ölartigen physikalisch wasserunlöslichen oder wasserschwerlöslichen Flüssigkeit, mehr als 55 Gew.-% Wasser sowie 0,5 bis 5 Gew.-% mindestens eines inerten feinteiligen Feststoffes mit einer Teilchengröße unter 0,1 $\mu$m und/oder 0,05 bis 8,5 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert oder die Polymerisation, Polykondensation oder Polyaddition initiert oder beschleunigt und/oder daß das Tensid aus einem Gemisch von mindestens 2 Tensiden mit unterschiedlichen HLB-Werten, die sich um mehr als 5 (HLB-Werte) unterscheiden, besteht und/oder 0,01 bis 9 Gew.-% mindestens eines Entschäumungsmittels, Verarbeitungshilfs- und/oder Zusatzmittels enthält oder daraus besteht, wobei die Waschflüssigkeit im fein oder feinstverteilten Zustand mit dem in Gegenrichtung geleiteten Abgas in Kontakt gelangt oder in Gegenwart des Abgases vernebelt, verdüst oder verwirbelt wird, daß die die organisch-chemischen Bestandteile des Gases oder die Verunreinigungen enthaltende Waschflüssigkeit an oder in der Nähe des Bodens der Gaswaschvorrichtung abgeleitet oder abgezogen oder abgepumpt und unmittelbar oder unter Zwischenschaltung weiterer Verfahrensschritte zu einem oder mehreren Reaktions-, Umsetzungs-, und/oder Absetz-, Abtrennungsbehältern geführt und die von den organisch-chemischen Stoffen, Lösemitteln oder Schadstoffen gereinigte Waschlüssigkeit ganz oder teilweise in die Gaswaschvorrichtung zurückgeleitet und erneut zur Abgasreinigung verwendet wird.

Als Co-Tensid oder Co-Surfactant werden je nach Art des eingesetzten Tensides, Weichmachers und/oder des zu entfernenden organisch-chemischen Lösungsmittels aliphatische Alkohole, vorzugsweise mehrwertige Alkohole mit zwei oder mehreren Hydroxylgruppen mit $C_2$ - $C_{16}$, vorzugseise $C_3$ - $C_{12}$, einschließlich Glykole, Glycerin sowie Glykolester und Glykolether, flüssige Glycerinether und/oder flüssige Polyglycerine oder auch Polyhydroxyether, -ester oder Polyalkohole eingesetzt.

Die Waschflüssigkeit wird gemäß der Erfindung in einer Mindestberieselungsdichte von 1 bis 100 $m^3/m^2h$, vorzugsweise 2 bis 75 $m^3m^2h$, in der Gaswaschvorrichtung verteilt und/oder als mindestens zweiphasige Waschflüssigkeit eine solche verwendet, die aus einer äußeren Wasserphase und einer inneren Ölphase besteht.

Beispiele

1. Zur Herstellung des Mittels mischt man in einem Behälter bis zum Erhalt einer feinteiligen Emulsion:

10 Gew.-Teile Di-(2-ethylhexyl)phthalat als ölartige, schwer wasserlösliche Flüssigkeit

2 " eines Nonylphenolpolyglykol-ethers mit durchschnittlich 9 angelagerten Molekülen Ethylenoxid/Molekül $(C_9H_{19}-\langle\overline{\bigcirc}\rangle-O-(C_2H_4O)_{\overline{X}}-H, \overline{X}=9)$ als nichtionisches, fettsäure-freies, schwachschäumendes Tensid

3 " eines hochdispersen, amorphen Siliciumdioxids mit einer durch-schnittlichen Teilchengröße von 12 nm; (Aersosil $^{(R)}$ 200 (Fa. Degussa)) als inerter feinteiliger Feststoff

und

85 " Wasser.

2. Zur Herstellung des Mittels mischt man in einem Behälter bis zum Erhalt einer feinteiligen Emulsion:

15 Gew.-Teile Di-(2-ethylhexyl-phthalat als ölartige, schwer wasserlös-liche Flüssigkeit

6

1 " eines Nonylphenolpolyglykolehters mit durchschnittlich
12 angelagerten Molekülen
Etylenoxid/Molekül
$(C_9H_{19}-$ ⬡ $-O-(C_2H_4O)_{\overline{x}}-H, \overline{x}=12)$
als nichtionisches, fettsäure-
freies, schwachschäumendes
Tensid

1 " eines Nonylphenolpolyglykolether mit durchschnittlich
4 angelagerten Molekülen
Ethylenoxid/Molekül
$(C_9H_{19}-$ ⬡ $-O-(C_2H_4O)_{\overline{x}}-H, \overline{x}=4)$
als Gemisch aus nichtionischen,
fettsäurefreien, schwachschäumenden Tensiden mit
HLB-Werten, die sich um mehr als
5 (HLB-Werte) unterscheiden

0,5 " Kaliumperoxidsulfat $(K_2S_2O_8)$ als
lösliches Hilfsmittel, das mit
dem oder den Schadstoff(en)
oder abzuscheidenden Stoff(en)
unter Polymerisation,
Polykondensation oder Polyaddition
reagiert oder die Polymerisation, Polykondenstion oder
Polyaddition initiiert oder
beschleunigt

und

82,5 " Wasser.

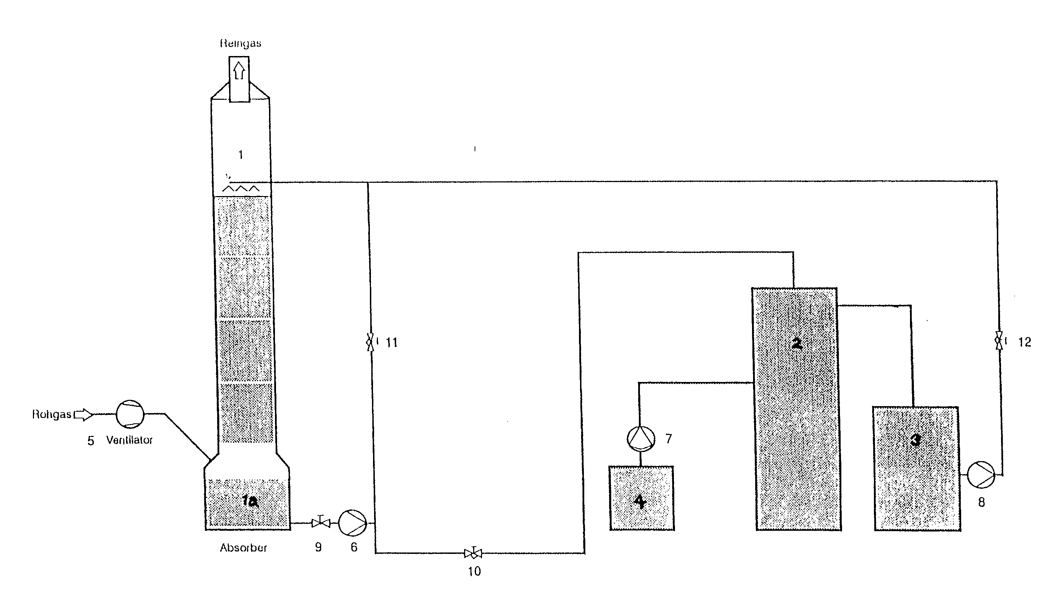

In der beigefügten Abbildung ist das erfindungsgemäße Verfahren und die Vorrichtungskombination schematisch dargestellt.

Die Gaswaschvorrichtung, vorzugsweise die Gegenstromabsorbervorrichtung 1, hat unterhalb ein Drittel ihrer Höhe, vorzugsweise unterhalb ein Viertel ihrer Höhe, mindestens eine Rohgaseintrittsöffnung oder Rohgaseinleitungsvorrichtung. Das Rohgas, Abgas oder zu reinigende Gas, wird bevorzugt mittels eines Ventilators, einer Pumpe oder einer ähnlichen Vorrichtung in die Gaswaschvorrichtung eingebracht, wobei nach einer Ausführungsform Luft oder ein anderes Gas zugemischt werden kann. Im Gegenstrom wird das erfindungsgemäße Mittel bzw. die Waschflüssigkeit in feinverteilter Form mit dem Abgas oder zu reinigenden Gas in Kontakt gebracht, ohne daß sich eine querschnittsabdeckende Schaumschicht in der Gaswaschvorrichtung oder der Gegenstromabsorbervorrichtung bildet. Bevorzugt wird dabei eine Berieselungsdichte von 2 bis 75 m³/m² eingehalten, wobei in den Versuchen Berieselungsdichten von 2, 10, 20, 30, 40, 50, 60, 70 und 75 m³/m²h bevorzugt eingestellt werden.

Die Waschflüssigkeit gelangt in fein- oder feinstverteilter Form dabei in Kontakt mit dem Abgas, wobei nach einer bevorzugten Ausführungsform Rieselkörper oder -elemente, Füllkörper, Einbauten und/oder Feinstrahldüsen oder Waschflüssigkeitsverteilervorrichtungen eingesetzt werden. Das gereinigte Gas tritt an oder in der Nähe des Kopfes der Gaswaschvorrichtung aus oder wird dort abgezogen.

Nach einer bevorzugten Ausführungsform hat das Mittel zum Reinigen von Gas oder Abgasen in der Gaswaschvorrichtung eines etwas geringere Gewichtskonzentration, insbesondere bezogen auf das Hilfsmittel, das mit dem oder den Schadstoffen unter Polymerisation, Polykondensation oder Polyaddition reagiert. Die Konzentration dieses Hilfsmittels wird jedoch nach einer Ausführungsform innerhalb der angegebenen Gewichtskonzentration gehalten und wird bevorzugt 0,01 Gew.-% nicht unterschreiten.

Eine Aufsättigung, insbesondere der Hilfsmittelkonzentration (Agens) und/oder eines oder mehrerer anderer Bestandteile des Mittels erfolgt nach einer bevorzugten Ausführungsform in oder vor Erreichen des Reaktions-oder Umsetzungsbehälters 2.

Das mit den Schadstoffen oder zu entfernenden Verunreinigungen beladene erfindungsgemäße Mittel (Waschflüssigkeit) gelangt bevorzugt über mindestens eine Absorbervorlage 1 a, vorzugsweise unter Mitverwendung von mindestens einer Pumpe 6 und/oder einer ähnlichen Vorrichtung und/oder unter Verwendung von mindestens einem Regelventil 9 und/oder 10, zu mindestens einem Reaktions- und/oder Umsetzungsbehälter 2, der vorzugsweise mit mindestens einem Vorratsbehälter 4 für das erfindungsgemäße Mittel oder für die Bestandteile des erfindungsgemäßen Mittels und/oder für Zusatzmittel in Verbindung steht, wobei vorzugsweise mindestens eine Pumpe 7 und/oder eine Steuervorrichtung und/oder Regelvorrichtung für die Einleitung des Mittels oder mindestens eines Bestandteiles des Mittels angeordnet ist bzw. sind. Das erfindungsgemäße Mittel wird in dem Umsetzungsbehälter auf die Anwendungskonzentration eingestellt und weist dort die angegebenen Gewichtskonzentrationen auf.

Nach einer bevorzugten Ausführungsform ist mindestens ein Absetz- oder Abtrennbehälter 3 an mindestens einem Reaktions- oder Umsetzungsbehälter angeordnet.

Das Mittel oder die von den Schadstoffen oder abzutrennenden Stoffen gereinigte Waschflüssigkeit wird bevorzugt über mindestens eine Pumpe 8 und/oder ein Regelventil 12 zu der Gaswaschvorrichtung 1 zurückgeleitet, wobei bevorzugt ein Teilstrom des Mittels mit einem gewissen Schadstoffgehalt über mindestens ein Regelventil 11 und/oder über eine Pumpe 6 in einem Teilkreislauf geführt und mit der gereinigten Waschflüssigkeit in die Gaswaschvorrichtung 1 oder die Gegenstromabsorbervorrichtung 1 eingeleitet wird.

## Patentansprüche

1.  Nichtschäumendes oder schwachschäumendes Mittel zum Reinigen von Gasen oder Abgasen unter Abtrennung von unerwünschten, chemischen Bestandteilen, vorzugsweise von organisch-chemischen Bestandteilen wobei das Mittel mindestens zweiphasig ist und das Mittel

    0,1 bis 10 Gew.-% mindestens eines fettsäurefreien Tensides,

    1 bis 25 Gew.-% mindestens einer ölartigen physikalisch wasserunlöslichen oder wasserschwerlöslichen Flüssigkeit (gemessen bei Wassertemperatur),

    mehr als 40 Gew.-% Wasser

    0,05 bis 8 Gew.-% mindestens eines inerten feinteiligen Feststoffes mit einer Teilchengröße unter 1 $\mu$m und/oder

    0,01 bis 10 Gew.-% mindestens eines löslichen, dispergierbaren oder supendierbaren Hilfsmittels, das mit dem oder den Schadstoff(en) oder abzuscheidenden Stoff(en) unter Polymerisation, Polykondensation oder Polyaddition reagiert und/oder die Polymerisation, Polykondensation oder Polyaddition initiert oder beschleunigt und/oder daß das Tensid aus einem Gemisch von mindestens 2 Tensiden mit unterschiedlichen HLB-Werten, die sich um mehr als 3 (HLB-Werte) unterscheiden, besteht und/oder 0 bis 13 Gew.-% mindestens eines Entschäumungsmittels, Verarbeitungshilfs- und/oder Zusatzmittels enthält.

2. Mittel nach Anspruch 1, dadurch gekennzeichnet, daß das Mittel

0,5 bis 2,5 Gew.-% mindestens eines fettsäurefreien Tensides,

1,5 bis 20 Gew.-% mindestens einer ölartigen physikalisch wasserunlöslichen oder wasserschwerlöslichen Flüssigkeit (gemessen bei Wassertemperatur),

mehr als 55 Gew.-% Wasser

0,5 bis 5 Gew.-% mindestens eines inerten feinteiligen Feststoffes mit einer Teilchengröße unter 0,1 $\mu$m und/oder

0,05 bis 8,5 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert oder die Polymerisation, Polykondenstion oder Polyaddition initiiert oder beschleunigt und/oder daß das Tensid aus einem Gemisch von mindestens 2 Tensiden mit unterschiedlichen HLB-Werten, die sich um mehr als 5 (HLB-Werte) unterscheiden, besteht und/oder

0,01 bis 9 Gew.-% mindestens eines Entschäumungsmittels, Verarbeitungshilfs- und/oder Zusatzmittels enthält oder daraus besteht.

3. Mittel nach Ansprüche 1 und 2, dadurch gekennzeichnet, daß das Tensid ein nichtschäumendes oder schwachschäumendes Tensid ist oder das Tensid oder Tensidgemisch zusätzlich ein Entschäumungsmittel enthält.

4. Mittel nach einem oder mehreren der Ansprüche 1 bis 3, dadurch gekennzeichnet, daß das Tensid oder Tensidgemisch aus mindestens einem fettsäurefreien, nichtionogenen, nichtschäumenden oder schwachschäumenden Tensid und/oder mindestens einem nichtionogenen schäumenden und fettsäurefreien Tensid, das zusätzlich mindestens ein Entschäumungsmittel enthält und/oder aus einem Gemisch von mindestens einem nichtionogenen Tensid mit mindestens einem ionogenen Tensid, die nichtschäumend oder schwachschäumend sind oder ein Entschäumungsmittel enthalten, besteht.

5. Mittel nach einem oder mehreren der Ansprüche 1 bis 4, dadurch gekennzeichnet, daß das Tensid oder Tensidgemisch in der angegebenen Matrix (Mittel und absorbierte oder absorbierte und gegebenenfalls adsorbierte Bestandteile) biologisch schwer abbaubar (innerhalb von 24 Std. nur maximal

bis zu 20 Gew.-%, vorzugsweise
bis zu 10 Gew.-%,

bezogen auf den Gesamttensidgehalt im Mittel (100 Gew.-Teile) ist.

6. Mittel nach einem oder mehreren der Ansprüche 1 bis 5, dadurch gekennzeichnet, daß das mindestens zweiphasige Mittel aus mindestens einer äußeren Wasserphase und einer innere Ölphase besteht.

7. Mittel nach einem oder mehreren der Ansprüche 1 bis 6, dadurch gekennzeichnet, daß der inerte, feinteilige Feststoff ein Oberflächenbehandlungsmittel oder -modifizierungsmittel, vorzugsweise ein Hydrophobierungsmittel oder Coatingmittel, enthält oder ganz oder teilweise auf der Oberfläche damit bedeckt oder überzogen ist.

8. Mittel nach einem oder mehreren der Ansprüche 1 bis 7, dadurch gekennzeichnet, daß

0,001 bis 5 Gew.-% aerobe und/oder anaerobe Bakterien oder eines aeroben und/oder anaeroben Bakterienstammes (berechnet als Trockenmasse an Bakterien), vorzugsweise 0,05 bis 1,5 Gew.-%, im Mittel enthalten sind.

9. Mittel nach einem oder mehreren der Ansprüche 1 bis 8, dadurch gekennzeichnet, daß die im Mittel enthaltenden Bakterien

zu mehr als 80 Gew.-%, vorzugsweise
zu mehr als 95 Gew.-%,

(bezogen auf 100 Gew.-% eingesetzte Bakterien), aus aeroben Bakterien bestehen.

10. Mittel nach einem oder mehreren der Ansprüche 1 bis 9, dadurch gekennzeichnet, daß die ölartige physikalisch wasserunlösliche oder wasserschwerlösliche organisch-chemische Flüssigkeit oder das Flüssigkeitsgemisch einen Siedepunkt von

mehr als 450 K, vorzugsweise
mehr als 520 K,

(gemessen bei 1000 hPA) und/oder einen Dampfdruck

unter 1 hPa, vorzugsweise
unter 0,1 hPa,

(gemessen bei 293,15 K) aufweist.

11. Mittel nach einem oder mehreren der Ansprüche 1 bis 10, dadurch gekennzeichnet, daß die ölartige wasserunlösliche oder wasserschwerlösliche organisch-chemische Flüssigkeit oder das ölartige Flüssigkeitsgemisch mindestens eine flüssige organischchemische Verbindung oder ein Verbindungsgemisch enthält oder daraus besteht, die Ester-, Äther-, Hydroxy-, Oxyäther- oder Hydroxyäther-, Keto-, und/oder organische Phosphatgruppen und/oder einen Weichmacher für Kunststoffe und/oder ein Silikonöl enthält und nicht bakterizid ist.

12. Mittel nach einem oder mehreren der Ansprüche 1 bis 11, dadurch gekennzeichnet, daß die organisch-chemische, ölartige, wasserunlösliche oder wasserschwerlösliche Flüssigkeit oder das ölartige Flüssigkeitsgemischin der angegebenen Matrix (Mittel und absorbierte oder absorbierte und gegebenenfalls adsorbierte Bestandteile) biologisch schwer abbaubar ist (innerhalb von 24 Std. nur maximal bis zu 2 Gew.-%, vorzugsweise kleiner als 1 Gew.-%, bezogen auf 100 Gew.-Teile der im Mittel enthaltenen ölartigen, organisch-chemischen, wasserunlöslichen oder wasserschwerlöslichen Flüssigkeit oder der Mischung der ölartigen, organischchemischen wasserunlöslichen oder wasserlöslichen Flüssigkeiten).

13. Mittel nach einem oder mehreren der Ansprüche 1 bis 12, dadurch gekennzeichnet, daß das Mittel

0,001 bis 3 Gew.-%, vorzugsweise
0,1 bis 1 Gew.-%,

mindestens eines Co-Surfactant, Co-Tensides oder eines Hilfstensides enthält, das die Wirkung des Tensides verstärkt und/oder das Tensid teilweise ersetzt, vorzugsweise ausgewählt aus der Gruppe der ein- oder mehrwertigen Alkohole oder Polyalkohole, Hydroxyester, Äther oder Polyäther, Ester und/oder Hydroxyäther oder Polyhydroxyäther.

14. Mittel nach einem oder mehreren der Ansprüche 1 bis 13, dadurch gekennzeichnet, daß die Bestandteile des Mittels als in Wasser nichtschäumende oder in Wasser schwachschäumende Verbindung und/oder durch einen entsprechenden Gewichtsanteil eines Entschäumungsmittels in einer derartigen Gewichtskonzentration vorliegen und/oder in einer derartigen Auswahl eingesetzt werden, daß ein nichtschäumendes oder sehr schwach schäumendes Mittel zur Reinigung von Gasen oder Abgasen vorliegt.

15. Mittel nach einem oder mehreren der Ansprüche 1 bis 14, dadurch gekennzeichnet, daß das Gewichtsverhältnis der nichtbakteriziden ölartigen Flüssigkeit zu Wasser

1 : 2 bis 1 : 100, vorzugsweise

1 : 4 bis 1 : 60,

beträgt.

16. Mittel nach einem oder mehreren der Ansprüche 1 bis 15, dadurch gekennzeichnet, daß das Gewichtsverhältnis von Tensid und/oder dem feinteiligen inerten Feststoff zu der nichtbakteriziden, ölartigen Flüssigkeit

1 : 0,8 bis 1 : 45, vorzugsweise
1 : 1,2 bis 1 :25,

beträgt.

17. Mittel nach einem oder mehreren der Ansprüche 1 bis 16, dadurch gekennzeichnet, daß das Mittel als Zusatzmittel

0 oder 0,1 Gew.-% bis 10 Gew.-%, vorzugsweise
0,5 Gew.-% bis 9,8 Gew.-%

mindestens eines feinteiligen Trägerstoffes mit einem mittleren Körnungsdurchmesser von

unter 4 mm, vorzugsweise
unter 200 $\mu$m,

enthält, vorzugsweise ausgewählt aus der Gruppe der Tägerstoffe mit einer spezifischen Oberfläche (gemessen nach BET) von mehr als 300 m²/g, vorzugsweise Aktivkohle, Silikate, Mischsilikate, Hydroxysilikate, Erdalkalioxide und/oder Aluminiumverbindungen enthaltende Silikate, Siliziumverbindungen einschließlich Silikate oder Siliziumoxid enthaltende Erdalkalioxide oder Erdalkalimischoxide, Kieselsäure, keramische Trägermaterialien, sämtliche vorgenannten Trägermaterialien in hydrophobierter oder nichthydrophobierter Form, allein oder im Gemisch mit anderen Trägerstoffen.

18. Verfahren zur Reinigung von Abgasen, wobei die Abgase in einer Gaswaschvorrichtung kontinuierlich oder diskontinuierlich dort verteilt und mit dem Abgas in Kontakt gebracht, die Schadstofe, Verunreinigungen oder abzutrennenden Stoffe mit der Waschflüssigkeit in mindestens einen Reaktions-, Umsetzungs-, und/oder Absetz-, Abtrennungsbehälter oder in ähnliche Vorrichtngen überführt, wo die Schadstoffe oder ein Teil derselben auf biologischem Wege umgesetzt, abgebaut und/oder chemisch oder physikalisch verändert und/oder ganz oder teilweise nachfolgend abgetrennt werden, dadurch gekennzeichnet, daß die verwendete Waschflüssigkeit mindestens zweiphasig ist, enthaltend oder bestehend aus mindestens einer äußeren Wasserphase und einer inneren Ölphase und

0,1 bis 10 Gew.-% mindestens eines fettsäurefreien Tensides,

mehr als 40 Gew.-% Wasser

0,05 bis 8 Gew.-% mindestens eines inerten feinteiligen Feststoffes mit einer Teilchengröße unter 1 $\mu$m und/oder

0,01 bis 10 Gew.-% mindestens eines löslichen,

dispergierbaren oder suspendierbaren Hilfsmittels, das mit dem oder den Schadstoff(en) oder abzuscheidenden Stoff(en) unter Polymerisation, Polykondensation oder Polyaddition reagiert und/oder die Polymerisation, Polykondensation oder Polyaddition initiert oder beschleunigt und/oder daß das Tensid aus einem Gemisch von mindestens 2 Tensiden mit unterschiedlichen HLB-Werten, die sich um mehr als 3 (HLB-Werte) unterscheiden, besteht und/oder

0 bis 13 Gew.-% mindestens eines Entschäumungsmittels, Verarbeitungshilfs- und/oder Zusatzmittels enthält oder daraus besteht, daß die Waschflüssigkeit im fein- oder feinstverteilten Zustand mit dem in Gegenrichtung geleiteten Abgas in Kontakt gelangt oder in Gegenwart des Abgases vernebelt, verdüst oder verwirbelt wird, daß die die organischchemischen Bestandteile des Gases oder die Verunreinigungen enthaltende Waschflüssigkeit an oder in der Nähe des Bodens der Gaswaschvorrichtung abgeleitet oder abgezogen oder abgepumpt und unmittelbar oder unter Zwischenschaltung weiterer Verfahrensschritte zu einem oder mehreren Reaktions-, Umsetzungs- und/oder Absetz- oder Abtrennungsbehälter geführt und die von den organisch-chemischen Stoffen, Lösemittel oder Schadstoffen gereinigte Waschflüssigkeit ganz oder teilweise in die Gaswaschvorrichtung zurückgeleitet und erneut zur Abgasreinigung verwendet wird.

19. Verfahren nach Anspruch 18, dadurch gekennzeichnet, daß für das Vefahren eine Waschflüssigkeit verwendet wird, die

0,6 bis 1,5 Gew.-%, mindestens eines fettsäurefreien Tensides, wobei das Tensid aus einem Gemisch von mindestens 2 Tensiden mit unterschiedlichen HLB-Werten, die sich um mehr als 4 (HLB-Werte) unterscheiden, besteht

1,5 bis 20 Gew.-% mindestens einer nichtbakteriziden ölartigen physikalisch wasserunlöslichen oder wasserschwerlöslichen Flüssigkeit

mehr als 55 Gew.-% Wasser sowie

0,5 bis 5 Gew.-% mindestens eines inerten feinteiligen Feststoffes mit einer Teilchengröße unter 0,1 μm und/oder

0,05 bis 8,5 Gew.-% mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert oder die Polymerisation, Polykondensation oder Polyaddition initiert oder beschleunigt und/oder daß das Tensid aus einem Gemisch von mindestens 2 Tensiden mit unterschiedlichen HLB-Werten, die sich um mehr als 5 (HLB-Werte) unterscheiden, besteht und/oder

0,01 bis 9 Gew.-% mindestens eines Entschäumungsmittels, Verarbeitungshilfs- und/oder Zusatzmittels enthält oder daraus besteht, daß die Waschflüssigkeit im fein oder feinstverteilten Zusand mit dem in Gegenrichtung geleiteten Abgas in Kontakt gelangt oder in Gegenwart des Abgases vernebelt, verdüst oder verwirbelt wird, daß die, die organischchemischen Bestandteile des Gases oder die Verunreinigungen enthaltende Waschflüssigkeit an oder in der Nähe des Bodens der Gaswaschvorrichtung abgeleitet oder abgezogen oder abgepumpt und unmittelbar oder unter Zwischenschaltung weiterer Verfahrensschritte zu einem oder mehreren Reaktions-, Umsetzungs- und/oder Absetz-, Abtrennungsbehältern geführt und die von den organisch-chemischen Stoffen, Lösemitteln oder Schadstoffen gereinigte Waschflüssigkeit ganz oder teilweise in die Gaswaschvorrichtung zurückgeleitet und erneut zur Abgasreinigung verwendet wird.

20. Verfahren nach Ansprüchen 18 und 19, dadurch gekennzeichnet, daß die Waschflüssigkeit in einer Mindestberieselungsdichte von 1 bis 100 m³/m²h, vorzugsweise 2 bis 75 m³/m²h, in der Gaswaschvorrichtung verteilt wird und/oder als mindestens zweiphasige Waschflüssigkeit eine solche verwendet wird, die aus einer äußeren Wasserphase und einer inneren Ölphase besteht.

Reingas

1

5 Ventilator

Rohgas

1a

Absorber

9    6

11

10

7

4

2

3

8

12

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 641 442   (KERAMCHEMIE)<br>* Ansprüche 1-7; Spalte 3, Zeilen 17-47 *<br>– – – | 1,8,18 | B 01 D 53/00<br>B 01 D 53/34 |
| A | WO-A-8 602 283   (J. COX)<br>* Seite 11, Zeile 25 - Seite 12, Zeile 34 *<br>– – – | 1,18 | |
| A | US-A-4 898 721   (R.M. ALWAY)<br>* Ansprüche 1-5 *<br>– – – | 1,18 | |
| A | EP-A-0 357 960   (ARASIN)<br>– – – | | |
| A | EP-A-0 281 844   (ARASIN)<br>– – – – – | | |

**RECHERCHIERTE SACHGEBIETE (Int. Cl.5)**

B 01 D
B 01 F

Der vorliegende Recherchenbericht wurde für alle Patentansprüche erstellt

| Recherchenort | Abschlußdatum der Recherche | Prüfer |
|---|---|---|
| Den Haag | 17 Mai 91 | KANOLDT W.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument